# EUROPÄISCHE PATENTSCHRIFT

(11) **EP 0 783 621 B1**
(45) Veröffentlichungstag und Bekanntmachung des Hinweises auf die Patenterteilung: **11.03.1998**
(21) Anmeldenummer: 95934632.1
(22) Anmeldetag: 22.09.1995
(51) Int. Cl.: F01N 3/20, F01N 3/28

(54) **ELEKTRISCH BEHEIZBARER KATALYSATOR**
ELECTRICALLY HEATABLE CATALYSER
CATALYSEUR POUVANT ETRE CHAUFFE ELECTRIQUEMENT

(30) Priorität: 28.09.1994 DE 4434673
(43) Veröffentlichungstag der Anmeldung: 16.07.1997
(73) Patentinhaber: Emitec Gesellschaft für Emissionstechnologie mbH, 53797 Lohmar (DE)
(72) Erfinder: Maus, Wolfgang, D-51429 Bergisch Gladbach (DE); Brück, Rolf, D-51429 Bergisch Gladbach (DE); Kruse, Carsten, D-53797 Lohmar (DE)
(74) Vertreter: Kahlhöfer, Hermann, Dipl.-Phys.
(86) Internationale Anmeldenummer: EP9503761
(87) Internationale Veröffentlichungsnummer: WO9610127

(56) Entgegenhaltungen:
- WO-A-92/13636
- DE-U- 8 900 168
- US-A- 4 909 994
- US-A- 5 278 125
- PATENT ABSTRACTS OF JAPAN vol. 174 no. 584 (M-1501) ,25.Oktober 1993 & JP,A,05 171928 (TOYOTA) 9.Juli 1993,

## Beschreibung

Die vorliegende Erfindung geht aus von einer Vorrichtung zur katalytischen Umsetzung von Abgasen in einem Abgassystem, insbesondere für ein Abgassystem einer Verbrennungskraftmaschine, vorzugsweise für Ottomotoren, mit den im Oberbegriff des Anspruchs 1 enthaltenen Merkmalen.

Durch die WO 92/13636 ist ein Wabenkörper mit mehreren, gegeneinander abgestützten Scheiben bekannt. Der Wabenkörper weist wenigstens zwei Scheiben auf, die voneinander beabstandet sind und nacheinander von einem Abgas durchströmt werden. Zur Verbindung der Scheiben untereinander sind nahe einer Achse Stützen angeordnet.

Die Herstellung eines solchen Wabenkörpers erweist sich jedoch als schwierig, da die Lage der Stützen in beiden Wabenkörperteilen bereits vorher genau festgelegt werden muß. Die vorhergehende Festlegung ist jedoch problematisch, da die exakt gleiche Ausgestaltung zweier Wabenkörper relativ schwierig ist. Dies liegt insbesondere daran, daß die Wabenkörper aus gewickelten Blechlagen bestehen und beim Wickeln sich die exakte Lage der Aufnahme für die Stützen nicht genau vorhersagen läßt.

Es sind ferner Vorrichtungen zur katalytischen Umsetzung von Abgasen ein Abgassystem bekannt, bei denen ein erster und ein zweiter Wabenkörper, die nacheinander von einem Fluid durchströmbar sind, bekannt. Die Wabenkörper sind mittels in die Wabenkörper hineinragender Stützelemente miteinander mechanisch verbunden. Um die katalytische Umsetzung von Abgasen möglichst schnell zu erreichen, ist der eine Wabenkörper elektrisch beheizbar. Der Wabenkörper weist hierzu wenigstens zwei mit der Mantelfläche des Wabenkörpers verbundene Stromverteilungsstrukturen auf, die jeweils mit einem elektrischen Stromanschluß verbunden sind. Die Strukturen dienen einer gleichmäßigen Stromverteilung. Der elektrisch beheizbare Wabenkörper ist mit einem Mantelrohr unter Zwischenschaltung einer Isolierschicht verbunden. Das Mantelrohr weist wenigstens zwei nach außen weisende Sicken auf, in die entsprechend geformte Sicken der Stromverteilungsstrukturen hineinragen. Die Strukturen sind mit nach außen ragenden Stiften versehen, die gegenüber dem Mantelrohr elektrisch isoliert sind. Die Stifte dienen als Anschlüsse zur Stromversorgung des beheizbaren Katalysators. Bedingt durch unterschiedliches thermisches Ausdehnungsverhalten der einzelnen Komponenten der Vorrichtung wird die Verbindungsstelle zwischen den Stiften und den Schalen mechanisch beansprucht. Um diese mechanische Beanspruchung zu verringern, sind die Stromverteilungsstrukturen mit den nach außen weisenden Sicken versehen, wodurch die auftretenden Kräfte von den Strukturen an das Mantelrohr übertragen werden. Eine solche Vorrichtung ist durch P.F. Küper, W. Maus et al. in SAE Technical Paper Series 940465 beschrieben.

Bei der Herstellung einer solchen Vorrichtung wird die Verbindung der Stützelemente mit den Wabenkörpern durch Löten erreicht. Während des Lötvorgangs, der in einem Lötofen stattfindet, gibt die isolierende Schicht Wasser ab, da es sich bei der isolierenden Schicht um eine Quellmatte handelt. Durch die Abgabe des Wassers in die Atmosphäre des Lötofens wird der Lötvorgang negativ beeinflußt, wodurch nur eine sehr geringe Anzahl von Vorrichtungen gleichzeitig in einen Lötofen gelötet werden kann.

Der vorliegenden Erfindung liegt die Aufgabe zugrunde, die bekannte Vorrichtung so weiter zu bilden, daß diese einfacher aufgebaut und besser herstellbar ist.

Diese Aufgabe wird durch die Merkmale des Anspruchs 1 gelöst. Vorteilhafte Weiterbildungen sind Gegenstand der Unteransprüche.

Die erfindungsgemäße Vorrichtung zur katalytischen Umsetzung von Abgasen in einem Abgassystem zeichnet sich dadurch aus, daß zusätzliche elektrisch isolierende Halteelemente vorgesehen sind, wobei jedes Halteelement mit seinem einem Ende mit der Mantelfäche des beheizbaren Wabenkörpers und mit seinem anderen Ende mit dem benachbarten Wabenkörper verbunden ist. Durch diese Maßnahme wird eine mechanisch stabile Verbindung zwischen dem beheizbaren ersten Wabenkörper und dem benachbarten zweiten Wabenkörper erreicht. Die elektrisch isolierenden Verbindungselemente nehmen die durch thermische Ausdehnung bedingten Kräfte auf, so daß die Stromanschlüsse mechanisch nicht beansprucht werden. Ein weiterer Vorteil dieser Ausgestaltung liegt darin, daß nunmehr auf eine Quellmatte zwischen dem elektrisch beheizbaren Wabenkörper und dem Mantelrohr verzichtet werden kann, wodurch der Lötprozeß in an für sich bekannter Art und Weise durchgeführt werden kann. Es können nunmehr viele Vorrichtungen gleichzeitig in einem Vakuum-Lötofen gelötet werden, ohne daß Wasser in die Lötofenatmosphäre gelangen kann.

Die Verbindungselemente können mit den Blechen des Wabenkörpers verlötet werden, wenn es sich bei dem Wabenkörper um einen metallischen Katalysator-Trägerkörper handelt.

Vorteilhafterweise bilden die Stromverteilungsstrukturen einen Teil der Mantelfläche des Wabenkörpers. Bei den Stromverteilungsstrukturen kann es sich um Blechstreifen handeln. Diese Blechstreifen können dann zumindest mit einigen Haltelementen verbunden werden. Die Verbindung der Halteelemente mit den Stromverteilungsstrukturen kann durch Löten oder Schweißen erfolgen.

Von Vorteil ist es, wenn die Stromverteilungsstrukturen schalenförmig ausgebildet sind. Hierdurch wird eine vorteilhafte Verteilung des Stromes über den Wabenkörper erzielt. Die Stromverteilungsstruktur kann eine dem Körper angepaßte Kontur aufweisen.

Es wird vorgeschlagen, zwei voneinander beabstandete und aufeinanderfolgende Stromverteilungsstrukturen vorzusehen, die wenigstens einen Teil der Mantelfläche des Wabenkörpers bilden. Jedes Halteelement ist bei dieser Ausbildung mit nur einer Stromverteilungsstruktur verbunden.

Zweckmäßigerweise wird vorgeschlagen, den benachbarten zweiten Wabenkörper mit einem inneren Mantelrohr zu versehen und die Halteelemente mit dem inneren Mantelrohr zu verbinden. Die Verbindung des inneren Mantelrohres mit den Haltelementen kann durch Löten oder Schweißen erfolgen.

Sind die beiden Wabenkörper durch die Halteelemente und die Stützelemente miteinander verbunden, so werden diese in das gemeinsame Mantelrohr eingeführt. Es wird vorgeschlagen, das gemeinsame Mantelrohr mit wenigstens einer umlaufenden Innensicke auszubilden, so daß die Innensicke an dem inneren Mantelrohr des benachbarten Wabenkörpers anliegt. Durch diese Innensicke wird bei einer Vorrichtung, bei der der Innendurchmesser des gemeinsamen Mantelrohres konstant und die Außendurchmesser der Wabenkörper gleich sind, verhindert, daß ein Teilstrom des Abgases ungereinigt durch die Vorrichtung hindurchströmt.

Die Innensicke ist vorteilhafterweise so ausgebildet, daß die Verbindung der Wabenkörper mit dem gemeinsamen Mantelrohr kraftschlüssig erfolgt.

Statt oder ergänzend zu der kraftschlüssigen Verbindung des gemeinsamen Mantelrohres mit dem Wabenkörper kann der Wabenkörper im Bereich der Innensicke mit dem gemeinsamen Mantelrohr verlötet oder verschweißt sein. Bei einer Lötverbindung kann das Mantelrohr des Wabenkörpers, wenigstens teilsweise, mit einem Lotmaterial beschichtet sein.

Die Ausbildung der Innensicken im gemeinsamen Mantelrohr kann vor der Einführung der Wabenkörper in das gemeinsame Mantelrohr erfolgen. Zweckmäßigerweise wird die Innensicke erst dann ausgebildet, wenn die Wabenkörper in dem gemeinsamen Mantelrohr angeordnet sind. Hierdurch wird die Anbindung der Stromanschlüsse an die Stromverteilungsstrukturen erleichtert, da die Wabenkörper nicht nur axial sondern auch radial verschiebbar sind.

Die Innensicke kann durch Walzen oder Kneten, insbesondere Rundkneten, hergestellt werden. Sie liegt vorteilhafterweise zur Minimierung von Relativdehnungen nahe der dem ersten Wabenkörper zugewandten Stirnseite des zweiten Wabenkörpers.

Um eine elektrische Entkopplung des elektrisch beheizbaren Wabenkörpers von dem benachbarten zweiten Wabenkörper zu gewährleisten, weist jedes Halte- und/oder Stützelement eine erste und eine davon beabstandete zweite den jeweiligen Endbereich eines Stiftes umgebende Hülse auf. Zwischen den Hülsen und dem Stift ist eine Isolierschicht vorgesehen. Diese Ausbildung ist von Vorteil, da eine doppelte Isolierung verwirklicht wird. Ein Spannungsüberschlag zwischen dem Stift und dem Wabenkörper kann zusätzlich durch eine auf der Stirnfläche des Stiftes angeordnete elektrisch isolierende Schicht verhindert werden.

Weitere Vorteile und Merkmale der Erfindung werden anhand eines bevorzugten Ausführungsbeispiels erläutert. Es zeigt
- Figur 1: schematisch im Längsschnitt eine Vorrichtung zur katalytischen Abgasumsetzung,
- Figur 2: eine Ansicht von links der Vorrichtung entlang des Schnittes II-II und
- Figur 3: ein Verbindungselement im Schnitt.

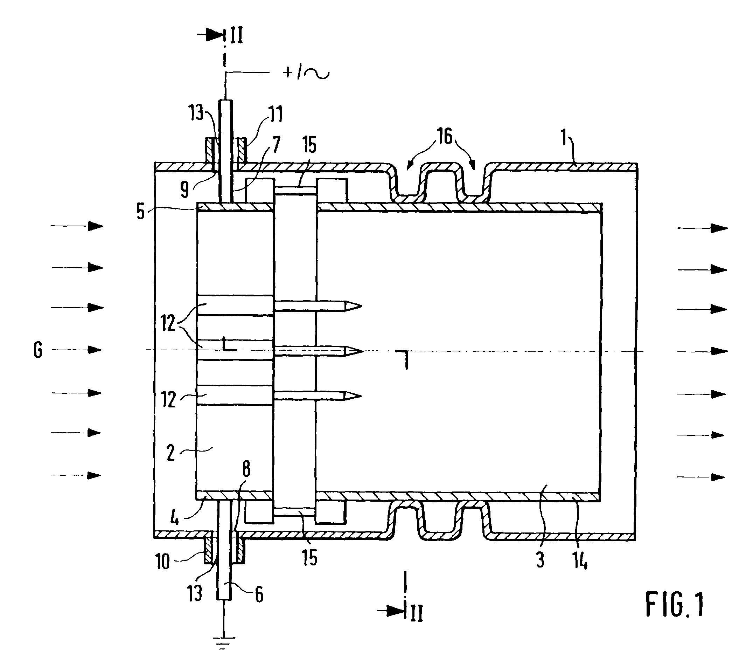

Figur 1 zeigt ein bevorzugtes Ausführungsbeispiel einer Vorrichtung zur katalytischen Umsetzung von Abgasen in einem Abgassystem. Die Vorrichtung umfaßt zwei in einem gemeinsamen Mantelrohr 1 angeordnete, nacheinander von einem Abgas G durchströmbare Wabenkörper 2, 3. Der erste Wabenkörper 2 ist mit Abstand zum gemeinsamen Mantelrohr 1 in diesem angeordnet und elektrisch beheizbar. Die äußere Mantelfläche des ersten Wabenkörpers 2 wird durch zwei schalenförmige Stromverteilungsstrukturen 4; 5 gebildet. Die Strukturen 4, 5 sind jeweils mit einem elektrischen Stromanschluß 6, 7 verbunden. Die Stromanschlüsse 6, 7 ragen durch im gemeinsamen Mantelrohr 1 ausgebildete Öffnungen 8, 9 nach außen. Die Stromanschlußteile 7, 6 durchdringen Verbindungsstücke 10, 11, die mit dem gemeinsamen Mantelrohr 1 verschweißt sind. Die Verbindungsstücke 11 weisen eine Isolierschicht 13 auf, so daß die Stromanschlüsse 6, 7 gegenüber dem gemeinsamen Mantelrohr 1 elektrisch isoliert sind.

Die zwei Wabenkörper 2, 3 sind mittels in die Wabenkörper hineinragender Stützelemente 12 miteinander verbunden. Zur besseren Übersichtlichkeit sind beispielhaft nur drei von einer Vielzahl von möglichen Stützelementen dargestellt.

Der Wabenkörper 3 weist ein inneres Mantelrohr 14 auf. Die Stromverteilungsstruktur 4 bzw. 5 ist mit dem inneren Mantelrohr 14 des Wabenkörpers 3 durch zusätzliche Halteelemente 15 verbunden.

In dem gemeinsamen Mantelrohr 1 sind zwei umlaufende Innensicken 16 ausgebildet. Die Innensicken 16 sind so ausgebildet, daß sie zur Anlage an das innere Mantelrohr 14 des Wabenkörpers 3 gelangen. An den sich berührenden Flächen zwischen Sicke 16 und dem inneren Mantelrohr 14 kann eine stoffliche Verbindung bestehen.

Die Innensicke 16 ist vorteilhafterweise relativ nahe an dem elektrisch beheizbaren Wabenkörper 2 ausgebildet, wodurch eine zu große Relativdehnung vermieden wird.

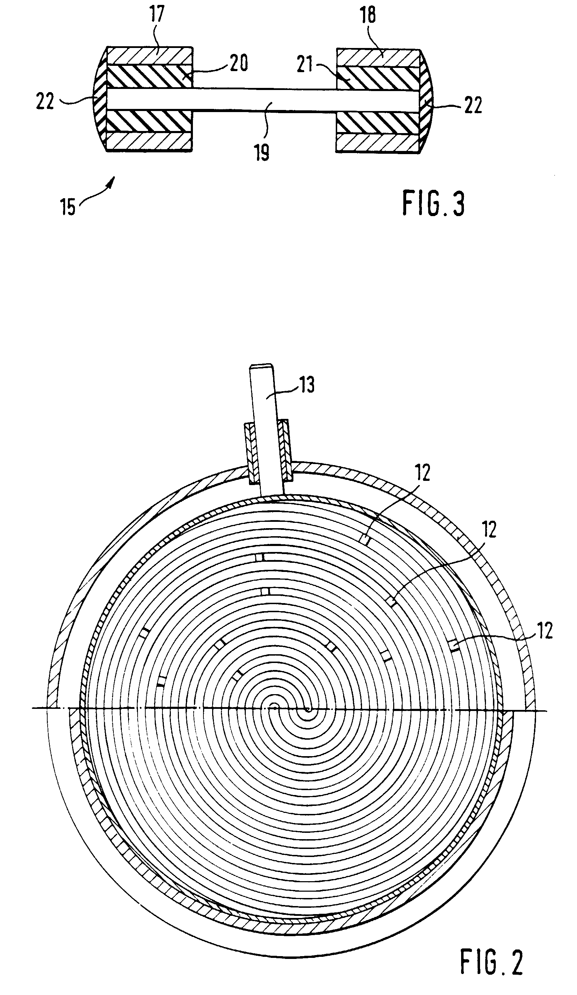

Figur 3 zeigt einen Längsschnitt durch ein Halteelement 15. Das Halteelement 15 umfaßt eine erste 17 und eine davon beabstandete zweite 18 den jeweiligen Endbereich eines Stiftes 19 umgreifende Hülse auf. Zwischen der Hülse 17 bzw. 18 und dem Stift 19 ist eine Isolierschicht 20 bzw. 21 ausgebildet, so daß der Stift 19 selbst potentialfrei ist, auch wenn an den Hülsen 17, 18 Spannungen liegen. Die elektrische Durchschlagsfestigkeit der Stützelemente wird gegenüber solchen mit durchgehenden Hülsen verdoppelt. Die Halteelemente und die Stützelemente können gleich ausgebildet sein. Hierdurch wird eine Verringerung der für die Fertigung der Vorrichtung notwendigen Teile erreicht. Die elektrische Trennung der Wabenkörper untereinander wird durch die Verwendung gleicher Halte- und Stützelemente verbessert. Die Darstellung in der Figur 3 zeigt eine mögliche Ausbildung eines Stützelementes. Wie aus der Figur 3 ersichtlich kann auf der Stirnfläche des Stiftes 19 zusätzlich eine elektrisch isolierende Schicht 22 ausgebildet sein. Statt nur die Stirnfläche des Stiftes mit einer elektrisch isolierenden Schicht zu versehen, kann die gesamte Stirnfläche des Elementes eine solche Schicht aufweisen. Hierzu können die Halte- und Stützelemente mit ihren Stirnseiten z.B. in eine Masse eingetaucht werden, die elektrisch isolierend ist und die Masse an den Stirnflächen nach Trocknung und bei hohen Temperaturen beständig bleibt.

Die doppelte elektrische Isolierung kann entfallen, wenn aufgrund der Anordnung der Verbindungselemente oder elektrischen Eigenschaften des Wabenkörpers 3 ein elektrischer Kurzschluß nicht zu befürchten ist.

Die Vorrichtung zur katalytischen Umsetzung von Abgasen wird so hergestellt, daß zunächst die beiden Wabenkörper 2, 3 durch die Stützelemente 12 und die Halteelemente 15 miteinander zu einer Baueinheit verbunden werden. Anschließend wird die Baueinheit in das gemeinsame Mantelrohr 1 eingeführt und die Stromanschlüsse 7 und 6 mit den Stromverteilungsstrukturen 4, 5, insbesondere durch Schweißen, miteinander verbunden. Gleichzeitig kann eine Verbindung der Anschlußstücke 10, 11 mit dem gemeinsamen Mantelrohr 1 durch Schweißen erfolgen.

Anschließend werden die Innensicken 16 im gemeinsamen Mantelrohr 1 hergestellt.

Die so vorbereitete Vorrichtung kann in einen Vakuumlötofen eingebracht werden, in dem das gemeinsame Mantelrohr 1 mit dem inneren Mantelrohr 14 verbunden wird. Hierzu ist das innere Mantelrohr 14 in einem vorbereitenden Arbeitsschritt mit einem Lotmaterial beschichtet worden. Nachdem der Lötvorgang durchgeführt wurde, kann die Vorrichtung einer Endbearbeitung zugeführt werden.

### BEZUGSZEICHENLISTE

- 1: gemeinsames Mantelrohr
- 2,3: Wabenkörper
- 4,5: Stromverteilungsstruktur
- 6,7: Stromanschluß
- 8,9: Öffnungen
- 10,11: Anschlußstücke
- 12: Stützelement
- 13: Isolierschicht
- 14: inneres Mantelrohr
- 15: Halteelement
- 16: Sicke
- 17,18: Hülse
- 19: Stift
- 20,21: Isolierschicht
- 22: Isolierschicht

## Patentansprüche

1. Vorrichtung zur katalytischen Umsetzung von Abgasen in einem Abgassystem, insbesondere für ein Abgassystem einer Verbrennungskraftmaschine, vorzugsweise für Ottomotoren, die wenigstens einen ersten und einen zweiten in einem gemeinsamen Mantelrohr (1) benachbart angeordnete, nacheinander von einem Abgas durchströmbare Wabenkörper (2; 3) umfaßt,
wobei mindestens der erste, wenigstens eine Stromverteilungsstruktur (4; 5) aufweisende, elektrisch beheizbare
Wabenkörper (2), mit Abstand zum äußeren Mantelrohr (1) in diesem angeordnet ist und
die benachbarten Wabenkörper (2; 3) mittels in die Wabenkörper (2; 3) hineinragender Stützelemente (12) miteinander mechanisch verbunden sind,
**gekennzeichnet durch** zusätzliche elektrisch isolierende Halteelemente (15), wobei jedes Halteelement (15) mit seinem einen Endbereich mit der Mantelfläche des beheizbaren ersten Wabenkörpers (2) und mit seinem anderen Ende mit dem benachbarten zweiten Wabenkörper (3) verbunden ist.

2. Vorrichtung nach Anspruch 1, dadurch gekennzeichnet, daß die Stromverteilungsstruktur (4; 5) einen Teil der Mantelfläche des ersten Wabenkörpers (2) bildet und wenigstens einige Halteelemente (15) mit der Stromverteilungsstruktur (4; 5) verbunden sind.

3. Vorrichtung nach Anspruch 1 oder 2, dadurch gekennzeichnet, daß die Stromverteilungsstruktur (4; 5) schalenförmig ausgebildet ist.

4. Vorrichtung nach Anspruch 1, 2 oder 3, dadurch gekennzeichnet, daß zwei voneinander beabstandete und aufeinanderfolgende Stromverteilungsstrukturen (4; 5) wenigstens einen Teil der Mantelfläche des ersten Wabenkörpers (2) bilden und jedes Halteelement (15) mit nur einer Stromverteilungsstruktur (4; 5) verbunden ist.

5. Vorrichtung nach einem oder mehreren Ansprüchen 1 bis 4, dadurch gekennzeichnet, daß jedes Halteelemente (15) mit einem inneren Mantelrohr (14) des zweiten Wabenkörpers (3) verbunden ist.

6. Vorrichtung nach Anspruch 5, dadurch gekennzeichnet, daß das gemeinsame Mantelrohr (1) wenigstens eine umlaufende Innensicke (16) aufweist, die am inneren Mantelrohr (14) des zweiten Wabenkörpers (3) anliegt.

7. Vorrichtung nach Anspruch 6, dadurch gekennzeichnet, daß die Innensicke (16) durch Walzen hergestellt ist.

8. Vorrichtung nach Anspruch 6, dadurch gekennzeichnet, daß die Innensicke (16) durch Kneten hergestellt ist.

9. Vorrichtung nach Anspruch 6, dadurch gekennzeichnet, daß das innere Mantelrohr (14) des zweiten Wabenkörpers (2) im Bereich der Innensicke (16) mit dem gemeinsamen Mantelrohr (1) verbunden ist.

10. Vorrichtung nach Anspruch 9, dadurch gekennzeichnet, daß das innere Mantelrohr (14) des zweiten Wabenkörpers (2) im Bereich der Innensicke (16) mit dem gemeinsamen Mantelrohr (1) kraftschlüssig verbunden ist.

11. Vorrichtung nach Anspruch 9, dadurch gekennzeichnet, daß das innere Mantelrohr (14) des zweiten Wabenkörpers (2) im Bereich der Innensicke (16) mit dem gemeinsamen Mantelrohr (1) verlötet ist.

12. Vorrichtung nach Anspruch 9, dadurch gekennzeichnet, daß das Mantelrohr (14) des zweiten Wabenkörpers (2) im Bereich der Innensicke (16) mit dem gemeinsamen Mantelrohr (1) verschweißt ist.

13. Vorrichtung nach einem der Ansprüche 1 bis 12, dadurch gekennzeichnet, daß jedes Stütz- und/oder das Halteelement (12; 15) einen Stift (19) enthält und eine erste (17) und eine zweite (18), den jeweiligen Endbereich des Stiftes (19) umgebende Hülse aufweist, wobei zwischen der Hülse (17, 18) und dem Stift (19) eine Isolierschicht (20, 21) vorgesehen ist.

14. Vorrichtung nach Anspruch 13, dadurch gekennzeichnet, daß an jeder Stirnfläche des Stiftes (19) eine elektrische isolierende Schicht angeordnet ist.

15. Vorrichtung nach Anspruch 13, dadurch gekennzeichnet, daß an jeder Stirnfläche jedes Stütz- und/oder des Halteelementes (12; 15) eine elektrische isolierende Schicht angeordnet ist.

## Claims

1. Apparatus for the catalytic conversion of exhaust gases in an exhaust system, in particular for an exhaust system of an internal combustion engine, preferably for Otto cycle engines, which includes at least one first and one second honeycomb body (2; 3) which are arranged in adjacent relationship in a common casing tube (1) and through which an exhaust gas can successively flow,
wherein at least the first electrically heatable honeycomb body (2) which has at least one current distribution structure (4; 5) is arranged in the outer casing tube (1) at a spacing relative thereto and
the adjacent honeycomb bodies (2; 3) are mechanically connected together by means of support elements (12) which project into the honeycomb bodies (2; 3),
characterised by additional electrically insulating holding elements (15), wherein each holding element (15) is connected with its one end region to the peripheral surface of the heatable first honeycomb body (2) and with its other end to the adjacent second honeycomb body (3).

2. Apparatus according to claim 1 characterised in that the current distribution structure (4; 5) forms a part of the peripheral surface of the first honeycomb body (2) and at least some holding elements (15) are connected to the current distribution structure (4; 5).

3. Apparatus according to claim 1 or claim 2 characterised in that the current distribution structure (4; 5) is of a shell-like configuration.

4. Apparatus according to claim 1, claim 2 or claim 3 characterised in that two mutually spaced successive current distribution structures (4; 5) form at least a part of the peripheral surface of the first honeycomb body (2) and each holding element (15) is connected to only one current distribution structure (4; 5).

5. Apparatus according to one or more of claims 1 to 4 characterised in that each holding element (15) is connected to an inner casing tube (14) of the second honeycomb body (3).

6. Apparatus according to claim 5 characterised in that the common casing tube (1) has at least one peripherally extending inwardly extending ridge (16) which bears against the inner casing tube (14) of the second honeycomb body (3).

7. Apparatus according to claim 6 characterised in that the inwardly extending ridge (16) is produced by rolling.

8. Apparatus according to claim 6 characterised in that the inwardly extending ridge (16) is produced by kneading.

9. Apparatus according to claim 6 characterised in that the inner casing tube (14) of the second honeycomb body (2) is connected in the region of the inwardly extending ridge (16) to the common casing tube (1).

10. Apparatus according to claim 9 characterised in that the inner casing tube (14) of the second honeycomb body (2) is force-lockingly connected in the region of the inwardly extending ridge (16) to the common casing tube (1).

11. Apparatus according to claim 9 characterised in that the inner casing tube (14) of the second honeycomb body (2) is soldered in the region of the inwardly extending ridge (16) to the common casing tube (1).

12. Apparatus according to claim 9 characterised in that the casing tube (14) of the second honeycomb body (2) is welded in the region of the inwardly extending ridge (16) to the common casing tube (1).

13. Apparatus according to one of claims 1 to 12 characterised in that each support and/or the holding element (12; 15) includes a pin (19) and first and second sleeves (17,18) embracing the respective end regions of the pin (19), an insulating layer (20, 21) being provided between the sleeve (17, 18) and the pin (19).

14. Apparatus according to claim 13 characterised in that an electrically insulating layer is arranged at each end surface of the pin (19).

15. Apparatus according to claim 13 characterised in that an electrically insulating layer is arranged at each end surface of each support and/or the holding element (12; 15).

## Revendications

1. Dispositif servant à la transformation catalytique de gaz d'échappement présents dans un système de gaz d'échappement, notamment pour un système de gaz d'échappement d'une machine à combustion interne, de préférence pour moteurs à quatre temps, ce dispositif comprenant au moins un premier et un deuxième corps à nid d'abeilles (2 ; 3), disposés de manière adjacente dans un tube enveloppe (1) commun et successivement parcourus par un gaz d'échappement,
dans lequel au moins le premier corps à nid d'abeilles (2), propre à être électriquement chauffé et présentant au moins une structure de répartition de courant (4 ; 5), est disposé avec un écartement par rapport au tube enveloppe extérieur (1), dans celui-ci, et
dans lequel les corps à nid d'abeilles (2 ; 3) voisins sont reliés mécaniquement l'un à l'autre au moyen d'éléments de support (12) pénétrant à l'intérieur des corps à nid d'abeilles (2 ; 3),
**caractérisé par** des éléments supplémentaires de retenue (15) électriquement isolants, chaque élément de retenue (15) étant relié par une zone d'extrémité à la surface extérieure du premier corps à nid d'abeilles (2) propre à être chauffé et, par son autre zone d'extrémité, au deuxième corps à nid d'abeilles (3) voisin.

2. Dispositif selon la revendication 1, caractérisé en ce que la structure de répartition de courant (4 ; 5) constitue une partie de la surface extérieure du premier corps à nid d'abeilles (2), et en ce qu'au moins quelques éléments de retenue (15) sont reliés à la structure de répartition de courant (4 ; 5).

3. Dispositif selon la revendication 1 ou 2, caractérisé en ce que la structure de répartition de courant (4 ; 5) est réalisée en forme de coquille.

4. Dispositif selon la revendication 1, 2 ou 3, caractérisé en ce que deux structures de répartition de courant (4 ; 5), situées à distance l'une de l'autre et successives, constituent au moins une partie de la surface extérieure du premier corps à nid d'abeilles (2) et en ce que chaque élément de retenue (15) est relié à une seule structure de répartition de courant (4 ; 5).

5. Dispositif selon une ou plusieurs des revendications 1 à 4, caractérisé en ce que chaque élément de retenue (15) est relié à un tube intérieur formant enveloppe (14) du deuxième corps à nid d'abeilles (3).

6. Dispositif selon la revendication 5, caractérisé en ce que le tube enveloppe (1) commun présente au moins une moulure intérieure circonférentielle (16), qui vient en appui contre le tube intérieur formant enveloppe (14) du deuxième corps à nid d'abeilles (3).

7. Dispositif selon la revendication 6, caractérisé en ce que la moulure intérieure (16) est fabriquée par laminage.

8. Dispositif selon la revendication 6, caractérisé en ce que la moulure intérieure (16) est fabriquée par façonnage.

9. Dispositif selon la revendication 6, caractérisé en ce que le tube intérieur formant enveloppe (14) du deuxième corps à nid d'abeilles (2) est relié, dans la zone de la moulure intérieure (16), au tube enveloppe (1) commun.

10. Dispositif selon la revendication 9, caractérisé en ce que le tube intérieur formant enveloppe (14) du deuxième corps à nid d'abeilles (2) est relié par adhérence, dans la zone de la moulure intérieure (16), au tube enveloppe (1) commun.

11. Dispositif selon la revendication 9, caractérisé en ce que le tube intérieur formant enveloppe (14) du deuxième corps à nid d'abeilles (2) est relié par brasage, dans la zone de la moulure intérieure (16), au tube enveloppe (1) commun.

12. Dispositif selon la revendication 9, caractérisé en ce que le tube intérieur formant enveloppe (14) du deuxième corps à nid d'abeilles (2) est relié par soudage, dans la zone de la moulure intérieure (16), au tube enveloppe (1) commun.

13. Dispositif selon l'une des revendications 1 à 12, caractérisé en ce que chaque élément de support et/ou l'élément de retenue (12 ; 15) contient une broche (19) et présente une première douille (17) et une deuxième douille (18) entourant la zone d'extrémité correspondante de la broche (19), une couche isolante (20, 21) étant prévue entre la douille (17, 18) et la broche (19).

14. Dispositif selon la revendication 13, caractérisé en ce qu'une couche électriquement isolante est placée au niveau de chaque face de la broche (19).

15. Dispositif selon la revendication 13, caractérisé en ce qu'une couche électriquement isolante est placée au niveau de chaque face de chaque élément de support et/ou de l'élément de retenue (12 ; 15).
